# EUROPÄISCHE PATENTSCHRIFT

(11) **EP 0 850 157 B1**
(45) Veröffentlichungstag und Bekanntmachung des Hinweises auf die Patenterteilung: **10.03.1999**
(21) Anmeldenummer: 96933298.0
(22) Anmeldetag: 09.10.1996
(51) Int. Cl.: B60P 1/64

(54) **VERFAHREN UND EINRICHTUNG ZUM TRANSPORT VON LEICHTEN GÜTERN**
PROCESS AND DEVICE FOR TRANSPORTING LIGHT GOODS
PROCEDE ET DISPOSITIF POUR TRANSPORTER DES ARTICLES LEGERS

(30) Priorität: 09.10.1995 CH 2843/95; 01.03.1996 CH 542/96
(43) Veröffentlichungstag der Anmeldung: 01.07.1998
(73) Patentinhaber: Lehner, Guido, 9403 Goldach (CH)
(72) Erfinder: MÜLLER, ERICH, 9008 St. GALLEN (CH); SCHLEINZER, PETER, 9112 Schachen (CH); LEHNER, GUIDO, 9403 Goldach (CH)
(74) Vertreter: Ackermann, Ernst
(86) Internationale Anmeldenummer: CH9600357
(87) Internationale Veröffentlichungsnummer: WO9713654

(56) Entgegenhaltungen:
- DE-A- 1 580 354
- DE-U- 1 939 002
- DE-U- 1 968 454
- GB-A- 1 198 635
- GB-A- 1 327 821
- GB-A- 2 294 243

## Beschreibung

### Technisches Gebiet

Einrichtung zum Transport von sperrigen Gütern, mit einem Aufbau, der wahlweise auf einem Fahrgestell transportierbar oder auf dem Boden über Stützen abstützbar und als Wechselplattform mittels Abhebt und Absenkvorrichtung, schnellwechselbar ist, wobei die Abhebe- und Absenkvorrichtung wenigstens drei, vorzugsweise vier verteilte Lagerstellen zum synchronen Abheben und Absenken des Aufbaues, ferner eine Trichter-Kegelverbindung zwischen Aufbau und Fahrgestell aufweist.

### Stand der Technik

Der Gütertransport hat in den vergangenen 50 Jahren eine enorme Entwicklung enfahren. Es haben sich Transportfahrzeuge der verschiedensten Grössen von z.Bsp. 3 bis 40 Tonnen mit zum Teil extrem grossen Ladevolumen durchgesetzt. Bei den unteren Gewichtsklassen sind die Kleinlastwagen oder sogenannte leichte Motorfahrzeuge sowie die sogenannten Lieferwagen stark verbreitet. Wenn auch mit Ausnahmen, kann gesagt werden, dass das Ladevolumen mit der zulässigen Tonnage steigt. Dies macht auch Sinn, wenn man an Güter wie Gesteine oder Maschinen denkt. Es entsteht jedoch eine völlige Fehlproportion, wenn es sich um leichte Güter wie Isolationsmaterialien handelt. Je nach besonderen Materialeigenschaften liegt das Gewicht von 20 bis 30 m³ Isoliermaterial bei weniger als zwei Tonnen. Das Transportfahrzeug das üblicherweise für eine solche Menge benutzt wird, könnte ohne weiteres 20 Tonnen laden. Das effektive Ladegewicht zu dem möglichen Ladegewicht liegt dabei im Verhältnis von mehr als 1 : 10 auseinander. Ein entsprechender Transport ist zumindest grundsätzlich nicht ökonomisch, dies umso mehr, als Transporte mit schweren Lastkraftwagen kostspieliger sind. Jedes grössere Transportunternehmen verfügt, um allen möglichen Transportaufgaben entsprechen zu können, über Lastwagen mit unterschiedlichen Aufbauten, jedoch über mehr Fahrzeuge als Fahrer. Ist ein Fahrer mit einem Lastwagen unterwegs, so bezahlt der Kunde sowohl die Kosten für den Lastwagen wie für den Fahrer. Bei kurzen Fahrstrecken kann die Auflade- und Abladezeit einen sehr wesentlichen Kostenanteil ergeben. In den letzten Jahren sind deshalb viele Ladehilfen entwickelt worden, besonders Autokrane und hydraulisch heb- und senkbare Ladebühnen. Bei sperrigen, leichten Gütern ist vielfach nicht einmal die Aufladezeit oder die Abladezeit an sich sehr kritisch. Wie manchmal beobachtet wird, kann in kürzester Zeit eine grosse Menge Isolationsmaterial ausgeladen bzw. aus dem Wagen geworfen werden. Das nachfolgende trockene Lagern über Tage oder Wochen ist häufig nicht gelöst, besonders wenn es sich um Baustellen handelt.

Ein ähnliches Problem, das aber recht erfolgreich gelöst werden konnte, besteht beim Transport von leichten Konsumgütern zwischen Zentrallagern und grossen Verkaufszentren. Mit besonderen Combitrailern wird hier die Ware im Zentrallager aufgeladen und der ganze Lastwagenaufbau auf zwei Rädern und Stützbeinen beim Verkaufszentrum so lange abgestellt, bis es von dem Personal des Verkaufszentrums abgeladen ist. Hier besteht der Lastkrafwagen aus zwei Fahrzeugen, dem vorderen eigentlichen Lastwagen oder Zugfahrzeug sowie einem hinteren, einachsigen Ladeteil bzw. Auflieger. Diese Lösung hat sich bewährt, setzt aber zwei, im Grunde gleichartige Auf- bzw. Abladestellen, insbesondere plane Hartbeläge an beiden Orten, sowie Gebäudedimensionen für die Grösse von Lastkraftwagen voraus. Für Baustellen sind solche Combitrailer soweit dem Anmelder bekannt ist, nicht im Einsatz. Es gibt dazu wohl mehrere Gründe. Der Kaufpreis von Lastwagenaufbauten ist verhältnismässig gross, da es sich um Spezialanfertigungen handelt, und deshalb ein tagelanges Stehen zu teuer wäre. Besonders kostenaufwendig ist jedoch der Speziallastwagen. In diesem Fall ist sowohl das motorische Zugmittel wie der Lastwagenaufbau teuer. Meistens wird auch hier für wenige Tonnen Transportgut ein Lastwagen für 20 Tonnen und mehr Nutzlast verwendet. Schwere Nutzfahrzeug sind daran zu erkennen, dass sie drei oder vier Achsen aufweisen. Bei mittelschweren Fahrzeugen werden die hinteren Räder vielfach doppelt ausgeführt. Auf einer Achse befinden sich dann vier Räder, damit mehr als acht Tonnen Güter transportiert werden können.

Bei mittel schwerern und schweren Transportfahrzeugen hat der Einsatz von sogenannten Wechselpritschen eine grosse Verbreitung gefunden. Eine solche Wechselpritsche ist z.Bsp. in der Deutschen Patentanmeldung 19 39 002 beschrieben. Diese schlägt vor, über mehrere Luftfederbälge die am Fahrgestell befestigt sind, die Wechselpritsche zu heben und zu senken, je nach dem ob es sich um das Montieren auf dem Fahrgestell handelt, oder das Abstellen auf vier Stützbeinen. Ein besonderes Problem stellt das Sichern der Pritsche mit der schweren oder zumindest mittelschweren Zuladung dar. Hierzu wird z.Bsp. in der DE-OS 40 27 586 sowie auch in der US-PS 4 339 148 ein Sicherungssystem vorgeschlagen mit welchem grosse, schwere und verwindungssteife Behälter auf einem verwindungsweichen Kraftfahrzeuggestell ohne Schwierigkeiten verankert werden können. Für die Sicherung selbst wird eine kleine Einführ- und Zentrierhilfe vorgesehen, so dass die schweren Körper präzise auf dem Fahrgestell abgesetzt werden können. Diese Lösungen bedingen zusätzliche Hilfen, sei es Umladekräne oder grosse fahrbare Stapelfahrzeuge. Ein entsprechender Wechsel der Pritsche kann deshalb nur an speziell dafür konzipierten Wechselplätzen erfolgen, meistens jedoch nur im eigenen Fuhrparkbereich des Transportunternehmens. Das Fahrzeug soll zuerst mit der richtigen Pritsche für die besondere Transportaufgabe ausgerüstet und dann auf die Reise geschickt werden.

Die GB-PS Nr. 1 327 821 zeigt ein weiteres Beispiel für ein Containerwechselsystem. Dabei sind vier hydraulisch ein- und ausziehbare Beine an dem Container fest angebracht, welche für die Funktion Stehzeug als Stützen benutzt und für die Funktion Fahrzeug eingezogen werden. Die Verbindung von Container und Fahrgestell wird durch eine Trichter-Kegel-Kombination hergestellt. Diese Lösung bedingt, dass das Fahrgestell millimetergenau unter den Container setzbar ist, was in der Praxis weitere Hilfsmittel bedingt.

Die GB-PS Nr. 1 198 635 zeigt eine besondere Ausgestaltung von Verbindungselementen, welche vor allem der Längspositionierung dient. Auch hier ist das Problem der Montage eines Containers auf ein Fahrgestell, wenn der Container auf freiem Feld steht und keine weiteren Positionierhilfsmittel zur Verfügung stehen, nicht gelöst.

Von den Erfindern ist erkannt worden, dass es für leichte, sperrige Güter von weniger als 8, insbesondere weniger als 4 Tonnen Transportgewicht zur Zeit gar kein sinnvolles Konzept gibt, das sowohl einen oekonomischen Transport wie auch längere Standzeiten von mehreren Tagen, gegebenenfalls mehreren Wochen, gestattet. Es fehlt insbesondere eine grosse, leichte Transporthilfe, die zwischen völlig ungleichen Ortsbedingungen gezügelt werden kann, z.Bsp. für Paketpostverteilung, für Kleinzügelaufgaben, aber auch zwischen einer Produktionsstätte von Isolationsmaterial bzw. zwischen Produktionsanlage und einer Baustelle, oder einem Landwirtschaftsbetrieb und einem Grossverteiler. Es hat sich gezeigt, dass es für leichte, sperrige Güter in der Praxis keine wirtschaftlich sinnvolle "Warenlogistik" gibt, eine Warenlogistik, nach der die Ware von der Produktion bis zur Endverarbeitung optimal transportiert und kostengünstig zwischengelagert wird.

### Darstellung der Erfindung

Der Erfindung wurde nun die Aufgabe zu Grunde gelegt, die ganze Warenlogistik für sperrige, leichte Güter, besonders bei grossem Volumen zu verbessern. Vor allem mit einem Minimum an Invenstitionsaufwand soll ein Maximum an Transportdienstleistung z.Bsp. vom Produzenten bis zum Endverarbeiter erbracht werden, für Transportgewichte von weniger als 8, insbesondere weniger als 4 Tonnen Gesamtgewicht. Dabei soll der Wechsel von Stehzeug-Fahrzeug ohne besondere Hilfsmittel wie Kräne, Gabelstapler usw. an beliebigen Orten, also nicht nur am Heimterminal durch eine Person durchführbar sein.

Die erfindungsgemässe Einrichtung ist dadurch gekennzeichnet, dass die Lagerstellen Auflagerplatten aufweisen, die eine Auflageebene bilden, und dass in Fahrrichtung vorne und hinten eine Einfangtrichter/Zentrierkegelkombination angeordnet ist, zum Einfangen, Abweisen und Zentrieren des Aufbaubes unter dem Eigengewicht, zum Schieben des Aufbaues über den Auflagerplatten und definierten Absetzen auf dem Fahrgestell.

Die Erfindung betrifft ein Verfahren zum Transport von sperrigen Gütern auf Ladeflächen mit, den Gütern angepasstem Aufbau, auf einem Fahrgestell, wobei die Ladefläche nach Bedarf wahlweise fest auf dem Boden abgestützt oder mit einem, unter die Ladefläche schiebbaren Fahrgestell über eine Trichter-Kegel-Kombination verbunden bzw. von dem Fahrgestell gelöst wird, wobei die Ladefläche als Wechsel-Plattform ausgebildet ist, so dass die Plattform für den Wechsel durch eine am Fahrgestell angeordnete Hebt und Senkeinrichtung auf das Fahrgestell abgesetzt bzw. vom Fahrgestell abgehoben, und durch ein Motorfahrzeug transportiert wird, und ist dadurch gekennzeichnet, dass für den Wechsel der Aufbau durch wenigstens drei oder vier einzelne, auf die Aufbaugrundfläche verteilte Auflagerstellen gehoben oder gesenkt wird, wobei für das Absetzen und Montieren auf dem Fahrgestell der Aufbau über zwei, etwa in der Längssymmetrieebene angeordnete Einfangstrichter/Zentrierkegel während der Absenkbewegung durch das Eigengewicht hinten und vorne in eine definierte Lage mittels einer in der Hebe- und Senkvorrichtung gebildeten Auflageebene geschoben wird.

Mit der neuen Lösung werden auch grossvolumige Leichtgüter wie Möbel, Pakete ,Harasse usw. anvisiert. Das Fahrgestell kann durch einen Kleinlastwagen von z.Bsp. 3,5 oder 7 Tonnen oder ein leichtes Motorfahrzeug wie Lieferwagen, zugstarke Jeeps usw. von Ort zu Ort verschoben werden. Dabei kann auch das Motorfahrzeug selbst erfindungsgemäss ausgebildet werden. Das Fahrgestell unterfährt zuerst die fest auf dem Boden abgestützte Plattform. Das Fahrgestell weist eine kleinhubige Abhebe- und Absenkvorrichtung auf, und versetzt auch einen nicht besonders versierten Fahrer in die Lage, ohne weitere Hilfen (wie Kran, Gabelstapler usw.) den jeweiligen Wechsel (Stehzeug-Fahrzeug) schnell und im Einmann-Betrieb, also durch eine Person allein, einfach und ohne besondere Gefahr durchzuführen. Die Abhebe- und Absenkvorrichtung wird nur um einen Hub von etwa 30 bis 40 cm, also um die Länge eines Fusses vertikal verstellt und ist Bestandteil des Fahrzeuges bzw. des Fahrgestelles.

Der überraschende Vorteil liegt darin, dass ein Unternehmen z.Bsp. nicht mehr 15 Lastwagen wie bisher, sondern nur noch wenige leichte Fahrzeuge oder Zugfahrzeuge halten muss, die in der Lage sind, einen drei bis vier Tonnen-Anhänger zu ziehen, ferner 15, 30 oder mehr preisgünstige Aufbauten. Da die Kosten für die Ladefläche mit Aufbau bzw. entsprechenden Container nur einen Bruchteil eines leichten Kraftfahrzeuges ausmachen, können diese sehr kostengünstig am Zielort, bis zur vollständigen Entleerung hingestellt werden. Bei vielen Handwerkern ist es üblich, dass ein wesentlicher Teil des Montagehilfsmateriales sowie die benötigten Werkzeuge täglich, teils sogar zwei mal täglich von dem Firmensitz zu der Baustelle gefahren werden. Mit dem System Wechselcontainer entfallen ein Grossteil der Fahrten. Die Anzahl der erforderlichen Container, Fahrgestelle und Zugfahrzeuge richtet sich nach den besonderen Umständen.

Die Erfindung erlaubt eine ganze Anzahl weiterer, vorteilhafter Einsätze. So kann der Aufbau als Baracke ausgebildet werden, welche für die Stehzeit auf vorzugsweise höhenverstellbaren Stützbeinen abgestützt und für den Wechsel an eine nächste Baustelle mittels einem Fahrgestell bzw. einem leichten Motorfahrzeug gezügelt wird. Der Aufbau wird gemäss einer weiteren Ausgestaltung als Container ausgebildet, der zwischen ungleichartigen Orten als Transportgefäss verwendet und z.Bsp. beim Produzenten für leichte landwirtschaftliche Konsumgüter, für Möbelumzüge, die Paketpost oder für leichte Industriegüter wie Isolationsmaterialien gefüllt, auf ein Fahrgestell aufgesetzt und wenigstens auf einer Teilstrecke bis zum Zielort mit einem leichten Motorfahrzeug transportiert wird. Für einige Anwendungen ist es vorteilhaft wenn die Höhe der Stützen einstellbar ist, z.Bsp. hydraulisch, oder mit dem System der bekannten Adria-Baustützen. Dies gestattet auch die Ladefläche in eine optimale Lage zu stellen, und allenfalls die Höhe jeder Stütze dem Gelände anzupassen, oder die Plattform in eine horizontale Lage zu bringen. Die Erfindung ermöglicht auch, dass die Plattform direkt auf eine Ladefläche eines Transportmittels oder auf den Boden abstellbar ausgebildet ist, derart, dass z.Bsp. für grosse Distanzen die Stückgüter z.Bsp. mit Bahnwagen transportiert werden, wo das Umladen mittels Kranhaken oder Gabelstapler erfolgt. Weiterhin ist es möglich, dass der Aufbau als Messecontainer ausgebildet wird, derart, dass damit die für einen Messestand bzw. Verkaufsstand benötigten Leichtteile transportiert und Plattform mit Aufbau als Messestand oder Teil eines Messestandes bzw. Verkaufsstandes eingesetzt wird.

Die Erfindung erlaubt auch viele besondere Ausgestaltungen. Die Lagerstellen werden je im Bereich der äusseren Drittel oder Viertel der Grundfläche des Aufbaues und die Einfangtrichter/Zentrierkegelkombination im Bereich der Längsmittelachse des Aufbaues angeordnet. Vorne und hinten (in Fahrrichtung gesehen) werden die Lagerstellen sowie die Einfangtrichter/Zentrierkegelkombination je in einer gemeinsamen Querachse angeordnet wobei die Stützen ebenfalls je in einer entsprechenden Querebene fixiert werden. An der Unterseite des Aufbaues wird dabei in der Querachse je ein Querträger befestigt, welcher als Baueinheit je einem Einfangtrichter und jeweils am äusseren Endbereich der Querträger Auflagerplatten als Auflagerstellen für die Abhebt und Absenkvorrichtung aufweist. Die zwei Querträger sind in einer Querebene, in der je sowohl die Auflagerstellen und die Einfangtrichter/Zentrierkegelkombination wie auch die Stützen angeordnet sind. Bevorzugt wird die Einfang/Zentrierkombination in je einer Längssymmetrieachse, die Einfangtrichter am Aufbau, und die Zentrierkegel sowie Abhebe- und Absenkvorrichtungen am Fahrgestell angeordnet. Die nutzbare Arbeitsfläche der Einfangtrichter und der Auflagerplatten ist etwa gleich gross. Die Manövriergenauigkeit eines Fahrzeuges liegt bei etwa 20 bis 50 cm. Entsprechend wird vorgeschlagen, den Durchmesser bzw. die Seitenabmessung von Auflagerplatten und Einfangtrichter zu dimensionieren. Ein einigermassen geübter Lenker eines Fahrzeuges ist in der Lage, das Fahrzeug mit einer Abweichung von 10 bis 25 cm auf ein vorgegebenes Feld zu parkieren. Aus vielerlei Gründen werden die Stützbeine nicht unnötig weit auseinander eingesetzt. Zum einen soll die benötigte Fläche bzw. Seitenabmessung eines Stehzeuges so klein wie möglich sein. Zum anderen wirkt sich eine zu grosse Ausladung ungünstig aus auf die kräftemässige Beanspruchung des Aufbaues. Kann nun ein Fahrer, sei es einen Anhänger oder das Fahrzeug selbst innerhalb dem genannten Spiel von 20 bis 50 cm parkieren ist auch schon das präzise Abstellen des Aufbaues auf dem Fahrgestell sichergestellt. Ein weiterer wichtiger Punkt liegt darin, dass der Einfangtrichter nicht zu hoch bauen darf. Von einer gegebenen Grundfläche ausgehend wird die Höhe des Trichters um so grösser je spitzer der Winkel ist. Bevorzugt wird der Winkel von mehr als 90°. Etwa 120° stellt einen optimalen Kompromiss für den Bewegungsablauf wie auch die Bauhöhe dar. Die Auflageplatten bilden vorzugsweise zusammen mit den Unterkanten der Einfangtrichter eine gemeinsame Auflageebene. Damit kann der Aufbau z.Bsp. als leerer Container auch ohne Stützen irgendwo abgestellt oder auch übereinander gestapelt werden.

Die Lagerstellen werden vorteilhafterweise an zwei Hohlprofil-Querträgern ausgebildet, in welchen die Stützen einsteckbar fixiert werden können. An der Decke des Containes werden in zwei Querebenen, welche die Lagerstellen einschliessen, Kranhaken angeordnet, ferner können zwischen den Auflagerstellen Anlageflächen für Gabelstapler-Eingriffe angeordnet werden. Gemäss einer weiteren Ausgestaltung wird zwischen der Plattform und dem Fahrgestell eine mechanisch oder hydraulisch betätigbare Sicherung angeordnet, welche an den Zentriertrichtern angreifen.

Die Erfindung betrifft ferner eine Einrichtung für den Transport von sperrigen, leichten Gütern durch ein leichtes Motorfahrzeug, mit einem Aufbau der wahlweise transportierbar oder auf dem Boden über Stützen abstützbar und als Wechselplattform schnell montierbar und demontierbar ist, welche dadurch gekennzeichnet sind, dass sie als Fahrgestell des Fahrzeuges oder eines Anhängers ausgebildet ist, mit einer Abhebe- und Absenkvorrichtung, welche auf wenigstens drei, vorzugsweise vier, verteilte Auflagerstellen eines Aufbaues einwirkt, zum synchronen Abheben und Absenken des Aufbaues, wobei die Auflagerstellen des Aufbaues Auflage;platten aufweisen, die eine Auflageebene bilden vorne und hinten je im mittleren Bereich ein Zentrierkegel angeordnet ist für eine Einfangtrichter/ Zentrierkegelkombination zum Einfangen, und Schieben des Aufbaues mit dem Eigengewicht, über den Auflagerplatten sowie definierten Absetzen auf dem Fahrgestell. Ferner betrifft die Erfindung eine Einrichtung für den Transport von sperrigen, leichten Gütern durch ein leichtes Motorfahrzeug, mit einem Aufbau, der wahlweise transportierbar oder auf dem Boden über Stützen abstützbar und als Wechselplattform schnell montierbar und demontierbar ist, welche dadurch gekennzeichnet ist, dass sie als Aufbau insbesondere als Container ausgebildet ist mit wenigstens drei, vorzugsweise vier verteilten Auflagerstellen, welche Auflagerplatten aufweisen, die eine Auflagerebene bilden für eine Abhebe- und Absenkvorrichtung eines Fahrgestelles, für das synchrone Abheben und Absenken des Aufbaues, wobei vorne und hinten, je im mittleren Bereich ein Zentrierkegel angeordnet ist für eine Einfangtrichter/Zentrierkegelkombination, zum Einfangen und Schieben des Aufbaues mit dem Eigengewicht über den Auflagerplatten sowie definierten Absetzen auf dem Fahrgestell. Insbesondere wenn der Aufbau als Container ausgebildet ist, der als Transportgefäss verwendet und z.Bsp. als Zügelcontainer oder für die Paketpostverteilung oder für leichte Industriegüter wie Isolationsmaterialien können die Längsseitenflächen bevorzugt als Werbeflächen mit entsprechenden Aufklebeplatten ausgebildet und verwendet werden.

Die neue Erfindung löst das zentrale Problem des Gewichtes. Bei einem Leichtfahrzeug wird versucht, jedes unnötige Kilogramm Gewicht am Fahrzeug selbst zu sparen. Dies bedeutet, dass besonders auch der Aufbau, im Gegensatz zu den mittelschweren und schweren Transportfahrzeugen in Leichtbauweise hergestellt sein soll. Eine Leichtbauweise hat aber in der Regel eine geringe Verwindungssteifigkeit. Die neue Erfindung schlägt nicht nur eine neuartige Wechselmechanik vor, sondern nutzt diese gleichzeitig aus, um in jeder Phase des Einsatzes einen optimalen Kräfteverlauf sicherzustellen, durch das klare Zusammenfassen in bestimmten Achsen resp. Ebenen. Bekannt ist das System der sogenannten Wechselmulden für Bauschutt. Eine Bauschuttmulde wird so lange am Ort gelassen, bis sie für die Wegnahme bereit ist. Spezielle Muldenfahrzeuge bringen und holen die Mulden. Die neue Erfindung gestattet nun sinngemäss ein System von Wechselcontainern aufzubauen. Die Container bekommen auf diese Weise eine eigenständige Funktion und werden wie bei den Bauschuttmulden in sehr grosser Stückzahl eingesetzt. Damit unterscheidet sich das neue Konzept vom System der Wechselpritschen, bei dem der Fahrer nur mit verschiedenen Pritschen unterwegs ist. Wechselpritschen geben die Möglichkeit am selben Lastkraftwagen verschiedene Pritschen je nach Einsatz zu montieren. Wechselpritschen bleiben beim Fahrzeug oder auf dem Abstellplatz des Transportunternehmens. Wechselcontainer gemäss der neuen Erfindung sind wie die Wechselmulden die meiste Zeit ohne das Fahrzeug am Einsatzort und können deshalb als Zwischenlager benutzt werden.

### Kurze Beschreibung der Erfindung

Die Erfindung wird nun an Hand einiger Ausführungsbeispiele mit weiteren Einzelheiten erläutert. Es zeigen:
- die Figur 1, 1a und 1b: Grunddispositionen für den Einsatz der neuen Erfindung;
- die Figur 2, 2a und 2b: drei Situationen beim Montieren eines Aufbaues auf ein Fahrgestell;
- die Figur 3: die Wirkung von zwei Einfangstrichter/Zentrierkugelkombinationen, in Bezug auf die Längsachse und
- die Figur 3a: verschiedene Positionen eines Zentrierkegels in Bezug auf einen einzelnen Zentriertrichter;
- die Figur 4, 4a und 4b: verschiedene Situationen beim Absenken und Montieren eines Aufbaues auf ein Fahrgestell;
- die Figur 5: einen Grundriss der Querträgerbaueinheit als Rahmenaufbau;
- die Figur 5a: einen Schnitt Va und
- die Figur 5b: einen Schnitt Vb der Figur 5;
- die Figur 6: schematisch den Grundriss einer einfacheren Querträgerkonstruktion;
- die Figur 7 und 7a: zeigen einen Wechselcontainer in einer Front- und einer Seitenansicht auf Stützbeinen stehend;
- die Figur 8: zeigt einen Wechselcontainer auf einer flachen Grundfläche bzw.auf dem Boden abgesenkt;
- die Figur 9, 9a und 9b: verschiedene Darstellungen der Sicherung des Aufbaues auf dem Fahrgestell;
- die Figur 10, 10a und 10b: verschiedene Montageschritte für den Aufbau einer Wechselbühne am Fahrgestell;
- die Figur 11: eine Wechselbühne als Modul im Grundriss;
- die Figur 12: ein Fahrgestell für das innerbetriebliche Verschieben eines Wechselcontainers.

### Wege und Ausführung der Erfindung

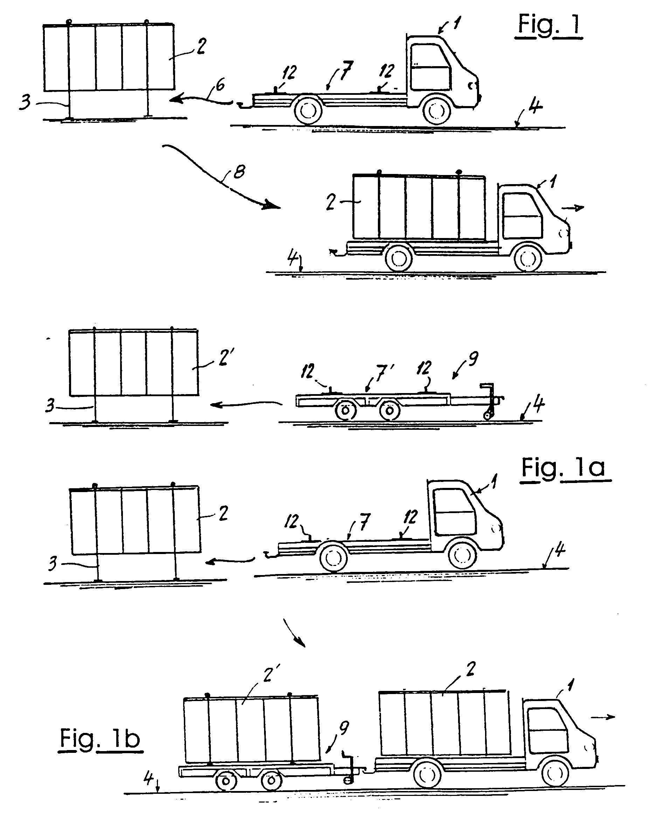

In der Folge wird nun auf die Figuren 1, 1a und 1b Bezug genommen. Ein Leichtfahrzeug 1 das als Zweiachser dargestellt ist, kann z.Bsp. ein Fahrzeugtype sein, bekannt unter dem Namen Mercedes Sprinter, VWLT35, Ford Transit, IVECO usw. Links daneben ist ein Aufbau dargestellt als Wechselcontainer 2, der über Stützen 3 auf dem Boden 4 abgestützt ist. Mit einem Pfeil 6 ist angedeutet, dass das Fahrzeug 1 im Begriffe ist, mit seinem hinteren Teil seines Fahrgestelles 7 unter den Wechselcontainer 2 zu fahren. Der Wechselcontainer 2 wird danach auf das Fahrgestell montiert, wie in der Folge im Detail noch dargestellt wird. Mit Pfeil 8 ist die fertig montierte Einheit als abfahrbereites Fahrzeug symbolisiert. Die Figuren 1a und 1b zeigen zwei weitere Einsatzmöglichkeiten, nämlich den Transport mit dem Fahrzeug selbst oder mit einem Anhänger, und die Figur 1b der Transport mit beiden. Der Transport mit einem Anhänger 9 hat insofern einen grossen Vorteil, als dieser mit einem Personenwagen oder einem Jeep gezogen werden kann, im Rahmen der zulässigen Ladegewichte.

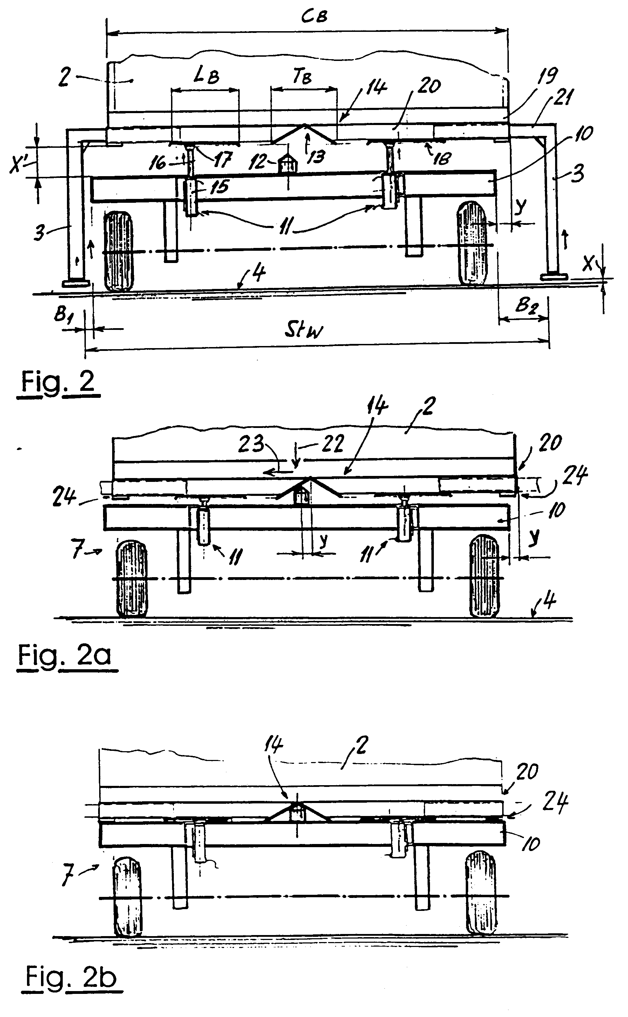

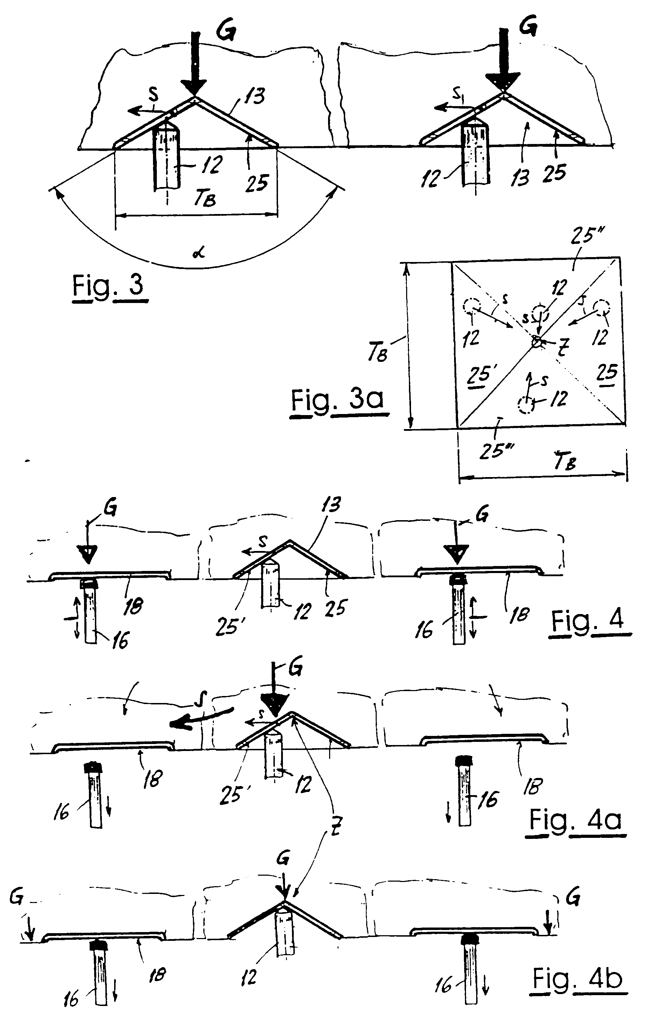

In den Figuren 2, 2a und 2b sind drei verschiedene Positionen von dem Beginn der Absenkbewegung des Aufbaues 2 bis zum Absetzen auf dem Fahrgestell dargestellt. Dabei ist die Figur 2 gleichzeitig das Ende der Abhebebewegung des Containers von der Abstützung auf den Boden über die Sützten 3. Das Fahrgestell weist oben eine Wechsellbühne 10 auf, welche ein Zwischenglied ist zwischen dem eigentlichen Fahrgestell sowie den Elemente über welche der Wechsel durchgeführt wird. Diese Elemente bestehen aus einer Abhebt und Absenkvorrichtung 11 sowie einem Zentrierkegel 12. Der Zentrierkegel 12 bildet zusammen mit einem Einfangtrichter 13 eine Einfangtrichter/Zentrierkegelkombination 14. Die Abhebe- und Absenkvorrichtung 11 besteht aus mehreren, vorzugsweise vier Hydraulikzylindern 15, welche über eine Kolbenstange 16 sowie einen Kolbenstangenkopf 17, je über eine Auflagerplatte 18 den Aufbau 2 stützen. Der Aufbau weist eine Plattform 19 auf, an deren Unterseite ein Querträger 20 befestigt ist, an denen sowohl der Einfangtrichter 13 wie auch die zwei Auflagerplatten 18 fest verbunden sind. Der Querträger 20 ist bevorzugt als Hohlprofil ausgebildet, in welchem an den beiden äusseren Enden ein horizontaler Träger 21 montiert z.Bsp. eingeschoben ist, der Teil der vertikalen Stützen 3 ist. Die Stützen 3 sind in der Figur 2 um ein kleines Mass X vom Boden abgehoben, das kleiner ist, als das Mass X' zwischen der Wechselbühne 10 sowie der Auflagerplatte 18 des Aufbaues. Die Differenz entspricht dem Einfederweg der Wechselbühne 10 auf dem Fahrgestell 7. In der Position gemäss Figur 2 können die Stützen 3 weggenommen und z.Bsp. um 90° in eine Horizontale oder um 180° in eine Vertikale verschwenkt werden. Der Aufbau 2 bzw. der ganze Container 2 ruht nun vollständig auf der Abhebe- und Absenkvorrichtung 11. Die Absenkbewegung kann beginnen. Die Kolbenstangen 16 werden zügig eingezogen und entsprechend der ganze Aufbau 2 abgesenk, bis die Spitze des Zentrierkegels 12 in Kontakt kommt mit dem Einfangtrichter 13 (Figur 2a). Der Zentrierkegel 12 ist in seiner einfachsten Ausgestaltung ein massiver runder Eisenkörper mit kegeliger Spitze und starr mit dem Fahrgestell bzw. der Wechselbühne verbunden. Der Zentrierkegel 12 kann aber auch mechanisch beweglich z.Bsp. als bewegbarer Kolben ausgebildet sein, und weitere Funktionen übernehmen. Die Hauptfunktionen der Zentrierkegel 12 sind eine Abweisung des Einfangtrichters 13, eine Zentrierung des Einfangtrichters und letztlich eine Sicherung des Aufbaues in der zentrierten Lage. Der Pfeil 22 in Figur 2a deutet die senkrechte Bewegung des Aufbaues von oben nach unten an. Der Pfeil 23 zeigt die horizontale Schiebebewegung an, die durch die Abweisbewegung zwischen Zentrierkegel 13 und der entsprechenden Schrägfläche 25' des Einfangtrichters entsteht (Fig. 4). Trotz anfänglichen Bedenken haben alle bisherigen Praxiseinsätze gezeigt, dass der entscheidende Bewegungsablauf aus der Stellung gemäss Figur 2a in die Stellung gemäss Figur 2b dann am besten abläuft, wenn der Vorgang zügig durchgeführt wird. Der Vorgang ist nicht ruckartig, wenn im Bewegungsablauf kein künstlicher Stillstand erzeugt wird. Das Fahrgestell unterstützt durch seine Einfederung und der Container durch seine Beweglichkeit mit vielen Freiheitsgraden den Bewegungsablauf, so dass der Container gleichsam in die präzise Auflageposition 'taumelt' bzw. rutscht. Es kann vorteilhaft sein, die Auflagerplatten 18 oder den Kolbenstangenkopf 17 mit einem gleitfördernden Material zu versehen. Bevorzugt werden zwischen der Wechselbühne 10 sowie der Plattform 19 dämpfende Zwischenlagen 24 vorgesehen, damit der Aufbau für die Fahrt allseits über viele Stellen gut auf dem Fahrgestell resp. auf der Wechselbühne ruht.

Der Figur 2 ist ein weiterer interessanter Aspekt der neuen Erfindung entnehmbar. Es wird angenommen, dass die grösste Breite des Fahrgestelles sowie die grösste Breite CB des Containers etwa gleich ist. Die lichte Weite zwischen den Stützen Stw ist demgegenüber um ein Mass B1 und B2 grösser. B1 + B2 ist das Spiel, dass der Fahrer hat, um das Fahrgestell unter dem Aufbau 2 zu parkieren. Die Breite LB der Lagerplatten 18 und die Breite TB des Einfangtrichters sind etwa gleich und je etwa gleich gross wie B1 und B2 zusammen. In der Praxis liegt dieses Mass zwischen 20 und 50 cm. Dies hat den ganz besonderen Vorteil, dass jede Parkierungsposition innerhalb der lichten Weite Stw zwischen den Stützen zu dem gleichen Ergebnis, dem präzisen Absetzen auf dem Fahrgestell führt. Das gleiche Problem tritt in Querrichtung des Fahrzeuges, wie auch in Fahrzeuglängsrichtung auf, wie in der Figur 3 dargestellt ist. In der Figur 3a ist angedeutet, dass der Trichter vier Gleitflächen 25, 25', 25'', 25''' aufweist. Jede der schrägen Gleitflächen 25 bewirkt, dass der Zentrierkegel in die Zentrumslage Z kommt (Figur 4b). Der Winkel α wird bevorzugt grösser als 90° optimal in dem Bereich von etwa 120° gewählt. Mit G ist das Gewicht des Containers angedeutet. Je mehr das Gewicht während dem Absenken von dem Aufbau bzw. dem Container von den Auflagern auf die Einfangtrichter verlagert wird, umso stärker ist die seitliche Schiebewirkung S auf den Container. Durch die Schiebewirkung S gleitet die Auflagerplatte über den Kolbenstangenköpfen 17. Würde, nur als theoretische Betrachtung, der ganzen Aufbau kurzzeitig nur auf den Spitzen der zwei Zentrierkegeln abgestützt und alle Kolbenstangen sich frei nach unten bewegen, so entstände ein vollkommen labile Lage für den Container.

Der Container würde sich zwangsnotwendig auf die eine oder andere Seite neigen und so wieder die seitliche Schiebebewegung auslösen. Es entstände eine leichte Erschütterung was wiederum für die Schiebebewegung förderlich wäre. Die Einfangstrichter können auch eine andere als eine einfache Pyramidenform haben, z.Bsp. gerundete Einführflächen.

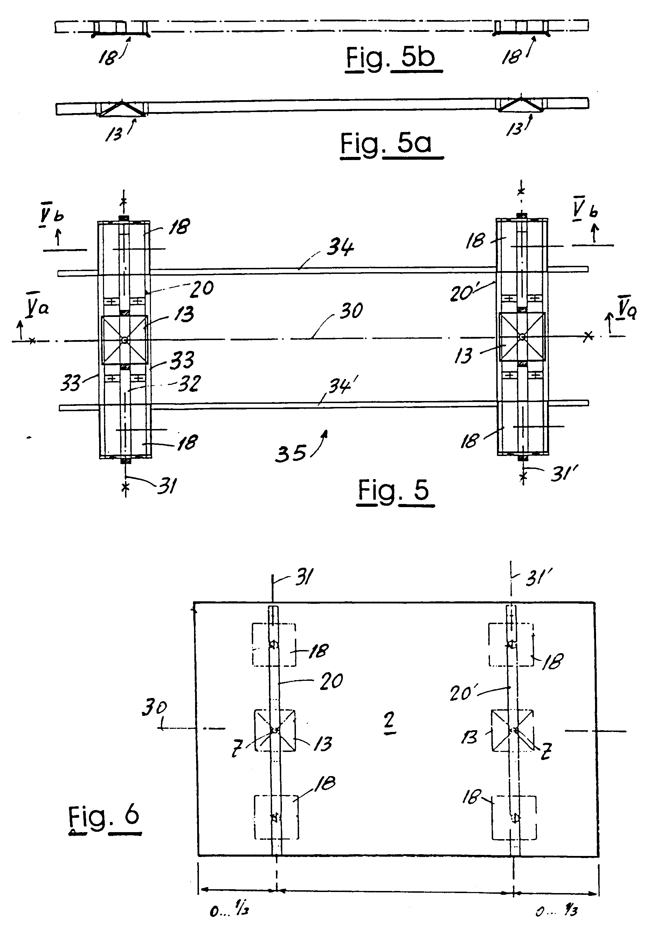

Die Figuren 5, 5a, 5b und 6 zeigen die systematische Anordnung der besprochenen Elemente zueinander. Die optimale Disposition liegt darin, dass die beiden Einfangtrichter 13 in der Längssymmetrieebene 30 des Containers angeordnet werden. Dies ergibt für die Taumel- und Schiebekräfte ein Optimum, resp. ähnliche oder gleiche Bedingungen in allen vier Richtungen (seitlich und längs). In Bezug auf die Kräfteübertragung bzw. Einwirkung auf den Container in Leichtbauweise empfiehlt sich die Anordnung sowohl der zwei Auflagerplatten 18 wie die Einfangtrichters 13 je hinten und vorne in einer gemeinsamen Querebene 31 resp. 31'. Ein Entsprechendes gilt für die Komplementärteile, Zentrierkegel und Abhebt und Absenkvorrichtung bzw. deren vier Hydraulikzylinder. Besonders für grössere Abmessungen ist es zweckmässig, die Querträger 20 aus einem mittleren Hohlprofil 32 sowie zwei seitlichen Profilen 33 zusammenzusetzen. Beide Querträger 20 und 20' werden mit zwei Längsverbindungen 34, 34' verbunden und bilden eine Querträgerbaugruppe 35 die mit einer Wechselplattform bzw. dem Boden, gegebenenfalls Holzboden, eines Containers verschraubt werden kann. Für eine gute Kräfteverteilung empfiehlt sich die beiden Querachsen 20, 20' innerhalb des äusseren Drittels oder des äusseren Viertels des Containers anzuordnen. Die Ausdrücke vorne und hinten beziehen sich auf die Fahrrichtung, haben oben dann keine Bedeutung, wenn der ganze Aufbau symmetrisch konzipiert ist. Die Querträger können als Standardgruppe und die Längsverbindungen 34 jeweils an jeder Fahrzeugtype bzw. Fahrzeuggrösse angepasst werden. Optimal ist jedoch für beide Richtungen ein Standardmass. Unabhängig der konstruktiven Ausgestaltung der Querträger bilden diese bevorzgut je eine Querachse 31 resp. 31' resp. Querebenen 31, 31'.

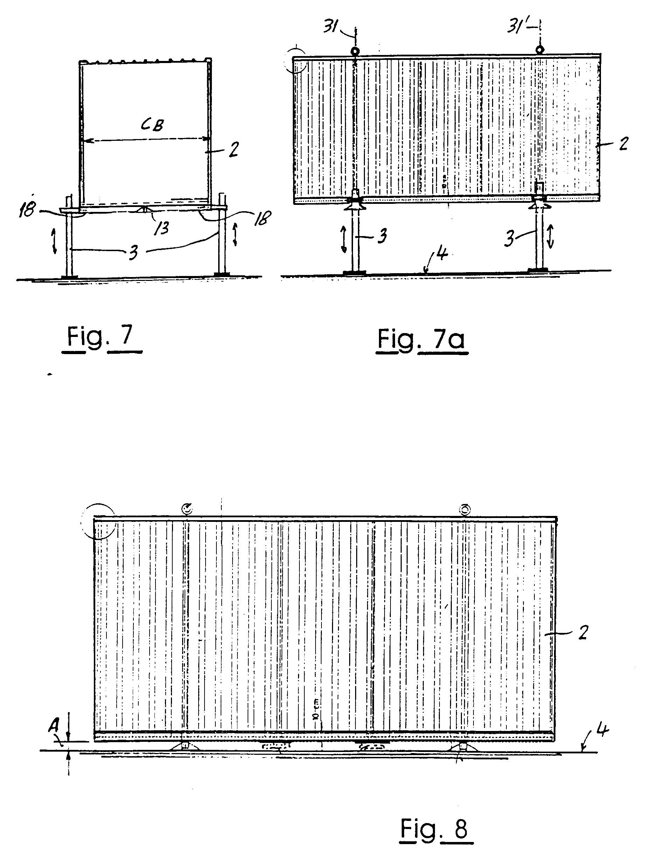

Die Figuren 7 und 7a zeigen einen Wechselcontainer auf Stützen 3 stehend. In jeder der beiden Querebenen 31, 31' sind zwei Lagerstellen sowie je eine Einfangtrichter/Zentrierkegelkombination, ferner zwei Stützen 3 sowie auch Kranhaken 38 angeordnet. Der Container kann aber bei Bedarf direkt auf den Boden 4 abgestützt werden (Fig. 8). Dabei entsteht ein minimaler Abstand A.

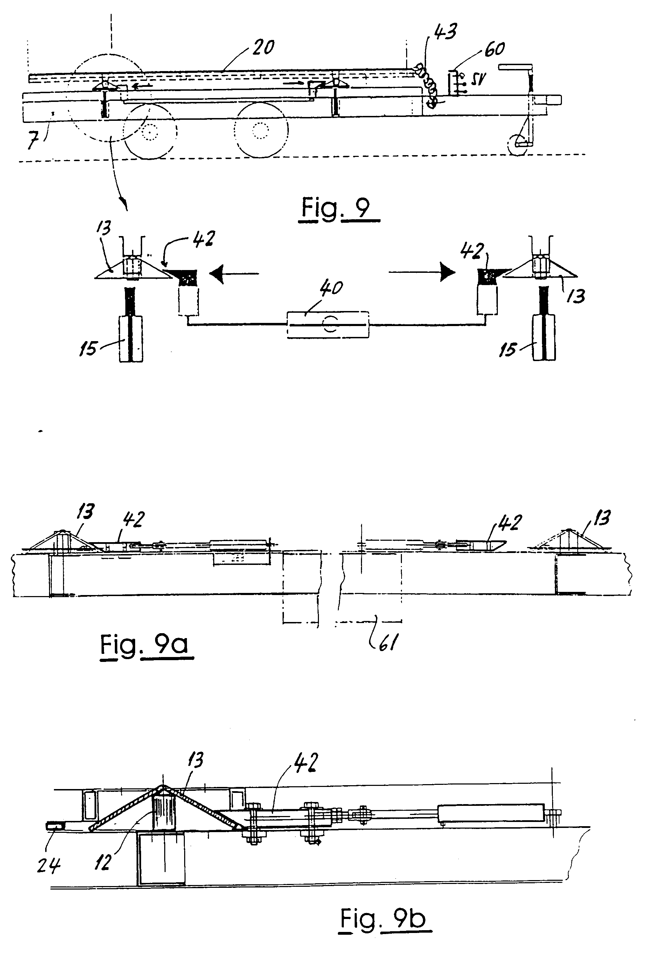

In Figur 9 zeigt die Situation einer Wechselbühne mit einer Plattform 20 die auf einem Fahrgestell montiert ist, darunter vergrössert ein Sicherungssystem. Über einen doppelwirkenden Zylinder 40 wird beidseits je eine Karabinersicherung betätigt. Ein entsprechender Klemmenkeil 42 greift in die Schräge des jeweiligen Zentriertrichters 13 ein und sichert die Verbindung von der Plattform 20 und dem Fahrgestell 7. Es ist ferner auch möglich als Zusatzsicherung z.Bsp. noch eine Kettensicherung 43 anzubringen. Die Figur 9a zeigt wie beidseits, nach vorne und nach hinten, die Verriegelung eingreift. Die Figur 9b ist eine Vergrösserung einer Verriegelungsseite. Wichtig ist das Zusammenwirken aller kontaktierenden Elemente: der vielen Auflagepunkte durch die dämpfenden Zwischenlagen 24, insbesondere aber die doppelte Keilwirkung des Zentrierkegels 12 im Inneren des Einfangtrichters 13 und des Klemmkeiles 42 am äusseren des Einfangtrichters.

Die Steuerungs- und Verriegelungsfunktionen SV werden von einem Steuerkasten 60 betätigt, welche bevorzugt mit der Elektrik des Fahrzeuges verbunden ist. Im gezeigten Beispiel weist die Abhebt und Absenkvorrichtung hydraulische Zylinder auf, welche von einer zentralen Hydrauliktruppe 61 mit dem Druckmedium versorgt werden. Alle Ventile sowie die Ein- und Ausschaltung erfolgt über den Steuerkasten 60. Ferner ist es möglich im Fahrzeug Verriegelungsfunktionen vorzusehen, so dass z.Bsp. das Fahrzeug nicht wegfahren kann, wenn Grundfunktionen nicht vorschriftsgemäss durchgeführt und abgeschlossen sind. Die beweglichen Elemente des Sicherungssystems sind mit dem Fahrgestell bzw. der Wechselbühne verbunden, bleiben also Teil des Fahrzeuges. Es ist damit möglich sehr viele gleiche preisgünstige Wechselcontainer mit nur einem vollständigen Fahrzeug mit den bewegten Teilen, den motorischen Mitteln sowie der Steuerung zu bedienen.

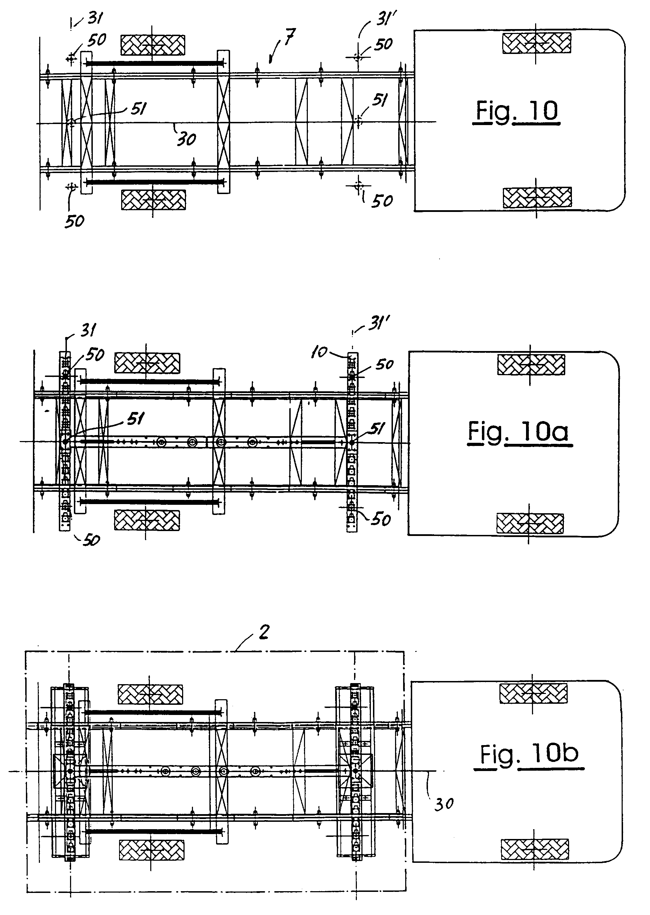

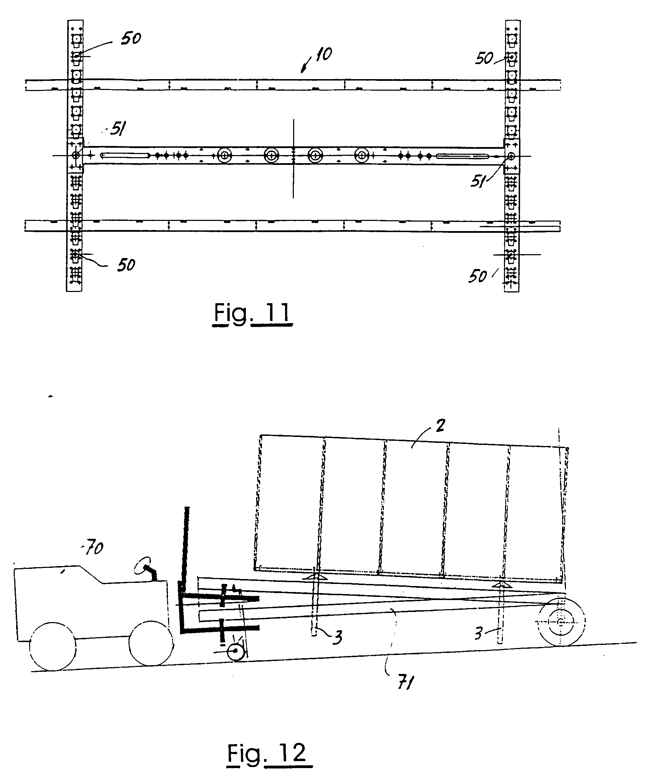

Die Figuren 10, 10a und 10b zeigen verschiedene Aufbaustufen einer Wechselbühne 10 an einem Fahrgestell eines Leichtfahrzeuges. Eingezeichnet in der Figur 10 fiktiv der Ort der Lagerstellen 50 sowie der Zentrierstellen 51. Die Zentrierstellen 51 befinden sich in der Längssymmetrieebene 30. Vorne und hinten befinden sich in je einer Querachse 31' bzw. 31 je zwei Lagerstellen 50 und jeweils in der Mitte eine Zentrierstelle 51. In der Figur 10a ist eine Wechselbühne 10 (Figur 11) bereits montiert und weist körperlich die Lager- und Zentrierstellen auf. In der Figur 10b ist zusätzlich ein Container 2 mit entsprechender Plattform 2 fertig montiert, wobei der Container 2 nur strichpunktiert angedeutet ist. Die motorische Hebe- und Senkvorrichtung greift über Lagerstellen ein und ist zum synchronen Abheben bzw. Absenken der Lagerstellen ausgebildet. Bevorzugt weist sie vier über die Containergrundfläche verteilte Lagerstellen auf, an denen motorische Antriebsmittel wie Pneumatikzylinder, Hydraulikzylinder, Luftfederkissen, Spindelmotoren oder Gewindespindeln bevorzugt synchron steuerbar angreifen. Für höhrere Ansprüche ist es möglich, dass die Verstellmotoren für eine Nivellierung des Containers je als Zweiergruppe synchron oder einzeln verstellbar sind. Die Abhebe- und Absenkvorrichtung kann aber mit einem motorisch oder von Hand anbetriebenen Scheren ausgerüstet werden.

Die Figur 12 zeigt eine Hilfseinrichtung in der Form eines Gabelstaplers 70, der in der Art eines Sackkarren 71 einen Container 2 innerbetrieblich verschiebt. Der Sackkarren 70 greift an dem selben Lager bzw. Zentrierstellen an wie die entsprechende Elemente der Wechselbühne 10. Der Vorteil der Sackkarrenlösung liegt darin, dass mit dem selben Konzeptaufbau innerbetrieblich der Container 2 mit einem minimalen Drehkreis verschoeben und z.Bsp. auf einem ausserhalb der Gebäude liegenden Parkplatz auf Stützen 3 in eine Bereitschaftsstellung gebracht werden kann.

Die neue Erfindung erlaubt auch insofern eine Verbesserung der Transportlogistik. Der wasserdichte Wechselcontainer wird selbst zu einem Gebinde, das entweder von einem Warenverteilzentrum oder direkt von der Fabrikationsanlage die Waren ohne andere Transporthilfen wie Paletten usw. direkt aufnimmt. Der Container wird wie eine grosse Kiste gefüllt und an das Zielort gebracht, wo es als Vorortlager dient. Im gegebenen Zeitpunkt wird der Container geholt und für den neuen Transport eingesetzt.

## Patentansprüche

1. Einrichtung zum Transport von sperrigen Gütern, mit einem Aufbau, der wahlweise auf einem Fahrgestell transportierbar oder auf dem Boden über Stützen abstützbar und als Wechselplattform mittels Abhebt und Absenkvorrichtung, schnellwechselbar ist, wobei die Abhebe- und Absenkvorrichtung wenigstens drei, vorzugsweise vier verteilte Lagerstellen zum synchronen Abheben und Absenken des Aufbaues, ferner eine Trichter-Kegel-Verbindung zwischen Aufbau und Fahrgestell aufweist,
**dadurch gekennzeichnet**,
dass die Lagerstellen Auflagerplatten aufweisen, die eine Auflageebene bilden, und dass in Fahrrichtung vorne und hinten eine Einfangtrichter/Zentrierkegelkombination angeordnet ist, zum Einfangen, Abweisen und Zentrieren des Aufbaubes unter dem Eigengewicht, zum Schieben des Aufbaues über den Auflagerplatten und definierten Absetzen auf dem Fahrgestell.

2. Einrichtung nach Anspruch 1,
**dadurch gekennzeichnet**,
dass die Lagerstellen je im Bereich der äusseren Drittel der Grundfläche des Aufbaues und die Einfangtrichter/ Zentrierkegelkombination im Bereich der Längsmittelachse des Aufbaues angeordnet sind.

3. Einrichtung nach Anspruch 1 oder 2,
**dadurch gekennzeichnet**,
dass vorne und hinten die Lagerstellen sowie die Einfangtrichter/ Zentrierkegelkombination je in einer gemeinsamen Querachse angeordnet und die Stützen bevorzugt ebenfalls je in einer entsprechenden Querebene fixierbar sind.

4. Einrichtung nach einem der Ansprüche 1 bis 3,
**dadurch gekennzeichnet**,
dass an der Unterseite des Aufbaues in der Querachse je ein Querträger befestigt ist, mit je einem Einfangtrichter und jeweils am äusseren Endbereich der Querträger Auflagerplatten als Auflagerstellen für die Abhebe- und Absenkvorrichtung angeordnet sind.

5. Einrichtung nach Anspruch 4,
**dadurch gekennzeichnet**,
dass die zwei Querträger je eine Querebene bilden, in der je sowohl die Auflagerstellen und die Einfangtrichter/ Zentrierkegelkombination wie auch die Stützen angeordnet sind.

6. Einrichtung nach einem der Ansprüche 1 bis 5,
**dadurch gekennzeichnet**,
dass die Einfang/ Zentrierkombination in je einer Längssymmetrieachse, die Einfangtrichter am Aufbau und die Zentrierkegel sowie Abhebt und Absenkvorrichtungen am Fahrgestell angeordnet sind.

7. Einrichtung nach einem der Ansprüche 1 bis 6,
**dadurch gekennzeichnet**,
dass die nutzbare Grundfläche der Einfangtrichter und der Auflagerplatten etwa gleich gross sind und bevorzugt etwa in dem Bereich der Manövriergenauigkeit von etwa 20 bis 50 cm Durchmesser bzw. Seitenabmessung liegt, wobei die Einfangtrichter einen Öffnungswinkel von mehr als etwa 90°, vorzugsweise etwa 120° aufweisen.

8. Einrichtung nach einem der Ansprüche 1 bis 7,
**dadurch gekennzeichnet**,
dass die Auflagerplatten vorzugsweise zusammen mit den Unterkanten der Einfangtrichter eine gemeinsame Auflageebene bilden.

9. Einrichtung nach einem der Ansprüche 1 bis 8,
**dadurch gekennzeichnet**,
dass die Verstellmotoren für eine Nivellierung des Containers je als Zweiergruppe synchron und/oder einzeln verstellbar sind.

10. Einrichtung nach einem der Ansprüche 1 bis 9,
**dadurch gekennzeichnet**,
dass die Lagerstellen an zwei Hohlprofil-Quertägern ausgebildet sind, in welchen vorzugsweise einsteckbar die Stützen fixiert sind.

11. Einrichtung nach einem der Ansprüche 1 bis 10,
**dadurch gekennzeichnet**,
dass an der Decke des Containers, vorzugsweise in zwei Querebenen, welche die Lagerstellen einschliessen, Kranhaken angeordnet sind und/oder dass zwischen den Lagerstellen Anlageflächen für Gabelstaplereingriffe angeordnet sind.

12. Einrichtung nach einem der Ansprüche 1 bis 11,
**dadurch gekennzeichnet**,
dass zwischen der Plattform und dem Fahrgestell eine mechanisch oder hydraulisch betätigbare Sicherung angeordnet ist, welche an den Zentriertrichtern angreift.

13. Einrichtung für den Transport von sperrigen, leichten Gütern durch ein leichtes Motorfahrzeug, mit einem Aufbau der wahlweise transportierbar oder auf dem Boden über Stützen abstützbar und als Wechselplattform schnell montierbar und demontierbar ist,
**daurch gekennzeichnet**,
dass sie als Fahrgestell des Fahrzeuges oder eines Anhängers ausgebildet ist mit einer Abhebt und Absenkvorrichtung welche auf wenigstens drei, vorzugsweise vier, verteilte Auflagerstellen eines Aufbaues einwirkt zum synchronen Abheben und Absenken des Aufbaues, wobei die Auflagerstellen des Aufbaues Auflagerplatten aufweisen, die eine Auflageebene bilden, vorne und hinten je im mittleren Bereich ein Zentrierkegel angeordnet ist für eine Einfangtrichter/Zentrierkegelkombination zum Einfangen, und Schieben des Aufbaues mit dem Eigengewicht über den Auflagerplatten sowie definierten Absetzen auf dem Fahrgestell.

14. Einrichtung für den Transport von sperrigen, leichten Gütern durch ein leichtes Motorfahrzeug, mit einem Aufbau, der wahlweise transportierbar oder auf dem Boden über Stützen abstützbar und als Wechselplattform schnell montierbar und demontierbar ist,
**dadurch gekennzeichnet**,
dass sie als Aufbau insbesondere als Container ausgebildet ist mit wenigstens drei vorzugsweise vier verteilten Auflagerstellen, welche Auflagerplatten aufweisen, die eine Auflageebene bilden für eine Abhebt und Absenkvorrichtung eines Fahrgestelles, für das synchrone Abheben und Absenken des Aufbaues, wobei vorne und hinten je im mittleren Bereich ein Zentrierkegel angeordnet ist für eine Einfangtrichter/ Zentrierkegelkombination, zum Einfangen und Schieben des Aufbaues mit dem Eigengewicht über den Auflagerplatten sowie definierten Absetzen auf dem Fahrgestell.

15. Verfahren zum Transport von sperrigen Gütern auf Ladeflächen mit, den Gütern angepasstem Aufbau, auf einem Fahrgestell, wobei die Ladefläche nach Bedarf wahlweise fest auf dem Boden abgestützt oder mit einem, unter die Ladefläche schiebbaren Fahrgestell über eine Trichter-/Kegelkombination verbunden bzw. von dem Fahrgestell gelöst wird, wobei die Ladefläche als Wechsel-Plattform ausgebildet ist, so dass die Plattform für den Wechsel durch eine am Fahrgestell angeordnete Hebe- und Senkeinrichtung auf das Fahrgestell abgesetzt bzw. vom Fahrgestell abgehoben, und durch ein Motorfahrzeug transportiert wird,
**dadurch gekennzeichnet**,
dass für den Wechsel der Aufbau, durch wenigstens drei oder vier einzelne, auf die Aufbaugrundfläche verteilte Auflagerstellen gehoben oder gesenkt wird, wobei für das Absetzen und Montieren auf dem Fahrgestell der Aufbau über zwei, etwa in der Längssymmetrieebene angeordnete Einfangstrichter/Zentrierkegel während der Absenkbewegung durch das Eigengewicht hinten und vorne in eine definierte Lage mittels einer in der Hebe- und Senkvorrichtung gebildeten Auflageebene geschoben wird.

16. Verfahren nach Anspruch 15,
**dadurch gekennzeichnet**,
dass der Aufbau als Container ausgebildet ist, der zwischen ungleichartigen Situationen als Transportgefäss verwendet und z.Bsp. für Paketversand, als Zügelcontainer oder beim Produzenten für leichte landwirtschaftliche Konsumgüter oder für leichte Industriegüter wie Isolationsmaterialien gefüllt, auf ein Fahrgestell aufgesetzt und wenigstens auf einer Teilstrecke bis zum Zielort mit einem leichten Motorfahrzeug transportiert wird, wobei wenigstens die Längsseitenflächen bevorzugt als Werbeflächen ausgebildet und verwendet werden.

17. Verfahren nach Anspruch 15 oder 16,
**dadurch gekennzeichnet**,
dass die Plattform direkt auf eine Ladefläche eines Transportmittels oder auf den Boden abstellbar ist, derart, dass z.Bsp. für grosse Distanzen die Stückgüter mit Bahnwagen transportiert und das Umladen mittels Kranhaken oder Gabelstapler erfolgt.

18. Verfahren nach Anspruch 15 oder 16,
**dadurch gekennzeichnet**,
dass der Aufbau als Messecontainer ausgebildet ist, derart, dass damit die für einen Messestand benötigten Leichtteile transportiert und die Plattform mit Aufbau als Messestand oder Teil eines Messestandes verwendet wird.

19. Verwendung der Einrichtung nach Anspruch 1, als Wechselcontainer, wobei eine grössere Zahl gleicher oder gleichartiger Aufbauten in der Art wie Bauschuttmulden durch ein bzw. wenige leichte Motor-Fahrzeuge von einem Nutzanwender zu einem Ziel oder einem anderen Nutzanwender transportiert wird und nach Bedarf am jeweiligen Nutzstandort ohne das Motorfahrzeug nach Bedarf stehen bleibt.

## Claims

1. Device for transporting bulky products with a superstructure which can be selectively transported on a chassis or supported on the ground via supports and rapidly interchanged as an interchangeable platform by means of a raising and lowering device, wherein the raising and lowering device comprises at least three, preferably four, distributed bearing points for the synchronized raising and lowering of the superstructure and also a funnel/cone connection between superstructure and chassis, characterized in that the bearing points have bearing plates which form a bearing plane and in that a combination of funnels/centring cones is arranged at the front and rear in the direction of travel for the capturing, rejection and centring of the superstructure under its inherent weight, for the sliding of the superstructure over the bearing plates and defined positioning on the chassis.

2. Device according to claim 1, characterized in that the bearing points are each arranged in the region of the outer third of the base area of the superstructure and the combination of funnels/centring cones in the region of the longitudinal central axis of the superstructure.

3. Device according to claim 1 or 2, characterized in that the bearing points and the combination of funnels/centring cones are each arranged in a common transverse axis at the front and rear and the supports can preferably also be fixed in a corresponding transverse plane in each case.

4. Device according to one of claims 1 to 3, characterized in that a respective transverse girder is fastened on the underside of the superstructure in the transverse axis with a respective funnel, and bearing plates are arranged as bearing points for the raising and lowering device at the outer end region of the transverse girders in each case.

5. Device according to claim 4, characterized in that the two transverse girders each form a transverse plane in which the bearing points and the combination of funnels/centring cones as well as the supports are arranged.

6. Device according to one of claims 1 to 5, characterized in that the capturing/centring combination is arranged in a respective longitudinal axis of symmetry with the funnels on the superstructure and the centring cones and raising and lowering devices on the chassis.

7. Device according to one of claims 1 to 6, characterized in that the useful base area of the funnels and the bearing plates are roughly identical in size and preferably lies roughly in the manoeuvrability range of about 20 to 50 cm diameter or lateral dimension, the funnels having an opening angle greater than about 90°, preferably about 120°.

8. Device according to one of claims 1 to 7, characterized in that the bearing plates preferably form a common bearing plane together with the lower edges of the funnels.

9. Device according to one of claims 1 to 8, characterized in that the servomotors for levelling the container are adjustable in synchronization and/or individually as a group of two in each case.

10. Device according to one of claims 1 to 9, characterized in that the bearing points are formed on two hollow profile transverse girders in which the supports can preferably be inserted and fixed.

11. Device according to one of claims 1 to 10, characterized in that crane hooks are arranged on the top of the container, preferably in two transverse planes which enclose the bearing points and/or in that contact surfaces for fork-lift truck interventions are arranged between the bearing points.

12. Device according to one of claims 1 to 11, characterized in that a mechanically or hydraulically actuable securing device which acts on the centring hoppers is arranged between the platform and the chassis.

13. Device for transporting bulky light products using a light motor vehicle with a superstructure which can be selectively transported or supported on the ground via supports and rapidly mounted and removed as an interchangeable platform, characterized in that it is designed as a chassis of the vehicle or of a trailer with a raising and lowering device which acts on at least three, preferably four, distributed bearing points of a superstructure for the synchronized raising and lowering of the superstructure, the bearing points of the superstructure having bearing plates which form a bearing plane, a centring cone being arranged at the front and rear in the central region in each case for a combination of funnels/centring cones for the capturing and sliding of the superstructure with its inherent weight via the bearing plates and defined positioning on the chassis.

14. Device for transporting bulky light products using a light motor vehicle with a superstructure which can be selectively transported or supported on the ground via supports and rapidly mounted and removed as an interchangeable platform, characterized in that it is designed as a superstructure, in particular as a container, with at least three, preferably four distributed bearing points which have bearing plates forming a bearing plane for a raising and lowering device of a chassis for the synchronized raising and lowering of the superstructure, a centring cone being arranged at the front and rear in each case in the central region for a combination of funnels/centring cones for the capturing and sliding of the superstructure with its inherent weight via the bearing plates and defined positioning on the chassis.

15. Process for transporting bulky products on loading surfaces with a superstructure adapted to the products on a chassis, the loading surface being supported rigidly on the ground or connected to a chassis which can be slid beneath the loading surface via a combination of funnels/cones or released from the chassis selectively as necessary, wherein the loading surface is designed as an interchangeable platform so the platform is positioned on the chassis by a raising and lowering device arranged on the chassis for the interchange and is raised from the chassis and is transported by a motor vehicle, characterized in that, for the interchange, the superstructure is raised or lowered by at least three or four individual bearing points distributed over the base of the superstructure, the superstructure being slid back and forth into a defined position by its inherent weight during the lowering movement via two funnels/centring cones arranged roughly in the longitudinal plane of symmetry by means of a bearing plane formed in the raising and lowering device for positioning and mounting on the chassis.

16. Process according to claim 15, characterized in that the superstructure is designed as a container which is used as a transport vessel between heterogeneous situations and is filled, for example for the dispatch of packages, as a removal container or at the manufacturer's in the case of light agricultural consumer goods or for light industrial products such as insulating materials, is placed on a chassis and is transported at least over a distance to its destination by a light motor vehicle, at least the longitudinal lateral surfaces preferably being designed and used as advertising surfaces.

17. Process according to claim 15 or 16, characterized in that the platform can be placed directly on a loading surface of a transporting means or on the ground in such a way that, for example for great distances, the bulk products are transported by rail trucks and are reloaded using crane hooks or fork-lift trucks.

18. Process according to claim 15 or 16, characterized in that the superstructure is designed as an exhibition container in such a way that the light parts required for an exhibition stand can be transported and the platform with superstructure is used as an exhibition stand or part of an exhibition stand.

19. Use of the device according to claim 1 as an interchangeable container, wherein a relatively large number of identical or similar superstructures such as skips is transported by one or a few light motor vehicles from a user to a destination or another user and remains at the respective site of use without the motor vehicle, as necessary.

## Revendications

1. Dispositif pour transporter des articles encombrants, avec une structure qui au choix peut être transportée sur un châssis ou être soutenue sur le sol par des supports, se présente sous la forme d'une plate-forme interchangeable et peut être remplacée rapidement au moyen d'un appareil de levage et d'abaissement, l'appareil de levage et d'abaissement présentant au moins trois, de préférence quatre points d'appui répartis, pour le soulèvement et `abaissement synchrones de la structure, ainsi qu'une liaison entonnoir-cône entre la structure et le châssis,
caractérisé en ce que les points d'appui présentent des plaques d'appui qui forment un plan d'appui et en ce qu'une combinaison entonnoir de réception/cône de centrage est disposée dans le sens de marche à l'avant et à l'arrière pour la réception, l'évacuation et le centrage de la structure sous le poids propre, pour glisser la structure sur les plaques d'appui et la déposer dans une position définie sur le châssis.

2. Dispositif selon la revendication 1, caractérisé en ce que les points d'appui et la combinaison entonnoir de réception/cône de centrage sont disposés respectivement dans la zone des tiers extérieurs de la surface de base de la structure et dans la zone de l'axe central longitudinal de la structure.

3. Dispositif selon la revendication 1 ou 2, caractérisé en ce que les points d'appui et la combinaison entonnoir de réception/cône de centrage sont disposés à l'avant et à l'arrière dans un plan transversal commun et les supports peuvent être fixés de préférence également dans un plan transversal approprié.

4. Dispositif selon l'une quelconque des revendications 1 à 3, caractérisé en ce que sur le dessous de la structure, dans l'axe transversal, est fixée une traverse avec un entonnoir de réception et respectivement dans la zone d'extrémité extérieure des traverses sont disposées des plaques d'appui comme points d'appui pour le dispositif de levage et d'abaissement.

5. Dispositif selon la revendication 4, caractérisé en ce que les deux traverses forment chacune un plan transversal dans lequel sont disposés les points d'appui et la combinaison entonnoir de réception/cône de centrage ainsi que les supports.

6. Dispositif selon l'une quelconque des revendications 1 à 5, caractérisé en ce que la combinaison de réception/centrage est disposée dans un axe de symétrie, les entonnoirs de réception sur la structure et les cônes de centrage ainsi que les dispositifs de levage et d'abaissement sur le châssis.

7. Dispositif selon l'une quelconque des revendications 1 à 6, caractérisé en ce que la surface de base utile des entonnoirs de réception et des plaques d'appui ont une grandeur à peu près identique et se situe de préférence à peu près dans la plage de la précision de manoeuvrabilité d'environ 20 à 50 cm de diamètre et de dimension latérale, les entonnoirs de réception ayant un angle d'ouverture de plus de 90° environ, de préférence environ 120°.

8. Dispositif selon l'une quelconque des revendications 1 à 7, caractérisé en ce que les plaques d'appui forment un plan d'appui commun de préférence conjointement avec les arêtes inférieures des entonnoirs de réception.

9. Dispositif selon l'une quelconque des revendications 1 à 8, caractérisé en ce que les servomoteurs peuvent être réglés de façon synchrone et/ou individuelle pour une mise à niveau du conteneur respectivement par groupe de deux.

10. Dispositif selon l'une quelconque des revendications 1 à 9, caractérisé en ce que les points d'appui sont réalisés sur deux traverses en profilé creux, dans lesquelles sont fixés les supports de préférence de façon emboîtable.

11. Dispositif selon l'une quelconque des revendications 1 à 10, caractérisé en ce que des crochets de grue sont disposés au plafond du conteneur, de préférence dans deux plans transversaux qui incluent les points d'appui, et/ou en ce que des surfaces de contact pour des engrènements de chariot élévateur sont disposées entre les points d'appui.

12. Dispositif selon l'une quelconque des revendications 1 à 11, caractérisé en ce qu'entre la plate-forme et le châssis est disposée une sécurité pouvant être actionnée de façon mécanique ou hydraulique, qui s'applique sur les entonnoirs de centrage.

13. Dispositif pour transporter des articles volumineux et légers au moyen d'un véhicule à moteur léger, avec une structure qui au choix peut être transportée ou être soutenue sur le sol au moyen de supports et peut être montée et démontée rapidement sous la forme d'une plate-forme interchangeable, caractérisé en ce qu'il est conçu comme le châssis d'un véhicule ou d'une remorque avec un dispositif de levage et d'abaissement, qui agit sur au moins trois, de préférence quatre points d'appui répartis d'une structure pour le soulèvement et l'abaissement synchrones de la structure, les points d'appui de la structure présentant des plaques d'appui qui forment un plan d'appui, un cône de centrage étant disposé à l'avant et à l'arrière dans la zone centrale pour une combinaison entonnoir de réception/cône de centrage pour recevoir et glisser la structure avec le poids propre au-dessus des plaques d'appui et la déposer dans une position définie sur le châssis.

14. Dispositif pour transporter des articles volumineux et légers au moyen d'un véhicule à moteur léger, avec une structure qui au choix peut être transportée ou soutenue sur le sol au moyen de supports et peut être rapidement montée et démontée sous la forme d'une plate-forme interchangeable, caractérisé en ce qu'il est conçu comme une structure, en particulier comme un conteneur, avec au moins trois, de préférence quatre points d'appui répartis, qui présentent des plaques d'appui, lesquelles forment un plan d'appui pour un dispositif de levage et d'abaissement d'un châssis, pour le soulèvement et l'abaissement synchrones de la structure, un cône de centrage étant disposé à l'avant et à l'arrière respectivement dans la zone centrale pour une combinaison entonnoir de réception/cône de centrage, pour recevoir et glisser la structure avec le poids propre sur les plaques d'appui et la déposer dans une position définie sur le châssis.

15. Procédé pour transporter des articles volumineux sur des surfaces de chargement avec une structure adaptée aux articles, sur un châssis, la surface de chargement étant soutenue au besoin au choix de façon fixe sur le sol ou étant reliée avec un châssis pouvant glisser sous la surface de chargement à l'aide d'une combinaison entonnoir/cône et étant détachée du châssis, la surface de chargement étant conçue comme une plate-forme interchangeable, de sorte que, pour le remplacement, la plate-forme est déposée sur le châssis par un dispositif de levage et d' abaissement et est soulevée du châssis, et est transportée par un véhicule à moteur, caractérisé en ce que, pour le remplacement, la structure est soulevée ou abaissée par au moins trois ou quatre points d'appui individuels et répartis sur la surface de base de la structure, la structure étant glissée pour la dépose et le montage sur le châssis au moyen de deux entonnoirs de réception/cônes de centrage disposés à peu près dans le plan de symétrie longitudinal pendant le mouvement d' abaissement sous l'effet du propre poids à l'arrière et à l'avant dans une position définie au moyen d'un plan d'appui formé dans le dispositif de levage et d'abaissement.

16. Procédé selon la revendication 15, caractérisé en ce que la structure est conçue comme un conteneur qui est utilisé comme récipient de transport dans des situations de nature différente et est chargé par exemple pour une expédition de paquet, comme conteneur à brides ou chez le producteur pour des articles de consommation agricoles légers ou pour des articles industriels légers tels que des matériaux d' isolation, est posé sur un châssis et est transporté au moins sur un tronçon partiel jusqu'au lieu de destination avec un véhicule à moteur léger, au moins les surfaces des grands côtés étant conçues et utilisées de préférence comme des surfaces publicitaires.

17. Procédé selon la revendication 15 ou 16, caractérisé en ce que la plate-forme peut être déposée directement sur une surface de chargement d'un moyen de transport ou sur le sol, de telle sorte que les colis de détail sont transportés par wagon par exemple pour de grandes distances et le transbordement s'effectue au moyen d'un crochet de grue ou d'un gerbeur à fourche.

18. Procédé selon la revendication 15 ou 16, caractérisé en ce que la structure est conçue comme un conteneur de foire, de telle sorte que les pièces légères employées pour un stand de foire sont transportées ainsi et la plate-forme avec structure est utilisée comme stand de foire ou partie d'un stand de foire.

19. Utilisation d'un dispositif selon la revendication 1 comme conteneur interchangeable, un nombre assez grand de structures identiques ou similaires étant transportées à la façon des bennes à gravois par un ou quelques véhicules à moteur légers d'un utilisateur vers une destination ou un autre utilisateur et restent immobilisées éventuellement sur le lieu d'utilisation respectif sans le véhicule à moteur.
